# EUROPEAN PATENT APPLICATION

(11) **EP 3 385 096 A1**
(43) Date of publication of application: **10.10.2018**
(21) Application number: 16870387.4
(22) Date of filing: 07.11.2016
(51) Int. Cl.: B60C 19/12, B29C 73/16, B29L 30/00

(54) **PNEUMATIC TIRE**

(30) Priority: 30.11.2015 JP 2015232710
(71) Applicant: Bridgestone Corporation, Tokyo 104-8340 (JP)
(72) Inventor: KAYASHIMA Kentaro, Tokyo 104-8340 (JP)
(74) Representative: Lang, Johannes
(86) International application number: PCT/JP2016/082920
(87) International publication number: WO 2017/094447

(57) **Abstract**

Provided is a pneumatic tire provided with a self-sealing mechanism in which effective temporary repair is made in puncturing while minimizing an increase in a weight, wherein sealant rubber compositions distinguished by sensitivities to temperature which are different in a cavity side and a tire rubber side are disposed in the sealant layer; and η₁/η₂ is 1.6 or more; η₁ is a viscosity of the sealant rubber composition in the cavity side, and η₂ is a viscosity of the sealant rubber composition in the tire rubber side at a shear rate of 1 s⁻¹ and a temperature of 30°C.

## Description

### Technical Field

The present invention relates to a pneumatic tire using a sealant material.

### Background Art

In tires such as tires for passenger cars, gases such as air and nitrogen are usually charged therein in an inner pressure of about 250 to 350 kPa in terms of an absolute pressure to provide a skeleton part of the tire with a tension. The tension described above makes it possible to restore deformation caused by an applied force. However, if the tire is lacerated, the gas charged in the inside is leaked to the outside from the lacerated part to reduce the inner pressure of the tire down to an atmospheric pressure, and the tire is in a punctured state.

In recent years, tires are requested to be enhanced more in performances as automobiles are increased in a running speed. On the other hand, spare tires are desired to be unnecessary because of a reduction in a weight required to automobiles. Required are tires on which automobiles can continue to run and move at least to a place making it possible to treat safely the tires even when the tires are punctured. Such the tires as described above make it possible to inhibit an inner pressure from being reduced and continuously run and move without carrying out treatments such as prompt repair and exchange to a place where the tires can be treated safely even when the inner pressure is lowered to make the automobiles impossible to run.

Tires in which a sealant material comprising a viscous rubber composition having a suitable fluidity is arranged in an inside are available as one of the tires described above. Applied is a technique in which when the tire is lacerated, the sealant material is inserted into the lacerated part by making use of an inner pressure of the tire to thereby seal the lacerated part and prevent the inner pressure from being reduced. In this connection, it depends on a retentivity and an adhering property of the sealant material whether or not the sealant material can function to seal the lacerated part.

When sharp foreign matters such as nails into a tire while running, the sharp foreign matters stay in the tire in a certain case in a state in which foreign matters go through the tire without getting away soon. In the state described above, an inner pressure in the tire is not lowered immediately. Then, such a force as rubbing the foreign matters which stick into the tire is applied in the inside of the tire while driving. Accordingly, the foreign matters are rubbed against the tire on a contact face, and the contact face is abraded to some extent, whereby a gap is formed on the contact face. When the foreign matters are suddenly separated, the inner pressure is lowered, and the car cannot be driven in certain cases. In such the case, it depends on followability and a fluidity of the sealant material whether or not the lacerated part can be sealed by the sealant material.

A pneumatic tire supports a load of the whole automobile while driving and generates heat, and therefore a temperature of tens dgreeC is readily reached in the inside whatever the outside temperature is. On the other hand, the outermost part which is brought into contact with a road surface, that is, the tread part is affected, as matter of course, by a road surface temperature. When driving in a cold region in a winter season, the tread part is exposed to a temperature of lower than a freezing point in a certain case, and it is assumed that a difference of temperature close to 100°C between the inside and the outside of the tire is caused. Also, an annual change in a road surface temperature still reaches tens degreeC. In view of the development of a traffic network and the spread of vehicles, travelling across regions having a large difference in temperature is increasing. Accordingly, pneumatic tires in which a sealant material is disposed are required as well to make it possible to meet such the broad temperature range as described above.

A rubber composition used for preparing a sealant material makes it possible to suitably change the properties such as the retentivity, the adhering property, followability and the fluidity each described above according to the composition. Also, some kind of the sealant material is changed in properties such as the retentivity, the adhering property, followability and the fluidity each described above when the temperature changes. Accordingly, it is difficult to meet properties by a single kind of the sealant material depending on the temperature range in the use environment. Practically the problems have so far been solved by supplementing properties by the amount of one kind of the sealant material, but the tire is increased in a weight, which leads to a deterioration in an energy efficiency and an increase in a load put on the tire itself.

With respect to dealing with problems by a sealant layer of a single kind of a composition, there is a case of forming the sealant layer by a method in which it is not necessarily easy in the first place to prepare many kinds of sealant compositions such a case as preparing a sealant layer by depolymerization by peroxide by heat applied in vulcanizing a rubber layer in forming a peripheral tire itself as is the case with patent document 1.

### Conventional Art Documents

### Patent documents

Patent document 1: Japanese Patent Application Laid-Open No. 2006-152110

### Summary of the Invention

### Problems to be solved by the invention

Provided is a pneumatic tire using a sealant material and making it possible to cope with puncture, wherein a countermeasure for a use environment in which a broad temperature change is involved can effectively be exerted without depending on a use amount of a sealant material. Means to solve problems

It is a pneumatic tire having sealant layers in which two or more kinds of sealant materials blended so that sensitivities to temperature are different are disposed, wherein a layer thickness of the sealant material prepared by an individual blending and the added layer thickness of the whole layers are controlled, and the pneumatic tire is excellent in a sealing effect of a puncture.

That is, the present invention resides in the following items (1) to (3).
(1) A pneumatic tire having a sealant layer arranged in the tire, wherein sealant rubber compositions distinguished by sensitivities to temperature which are different in a cavity side and a tire rubber side are disposed in the sealant layer; and η₁/η₂ is 1.6 or more; η₁ is a viscosity of the sealant rubber composition in the cavity side, and η₂ is a viscosity of the sealant rubber composition in the tire rubber side at a shear rate of 1 s⁻¹ and a temperature of 30°C.
(2) The pneumatic tire as described in the above item (1), wherein two or more kinds of the sealant layers which are distinguished each independently as a first sealant layer in the cavity side and a second sealant layer in the tire rubber side are provided in the sealant layer; η₁/η₂ is 1.6 or more, and a viscosity η = (η₁·t₁ + η₂·t₂)/(t₁ + t₂) averaged in terms of the thickness is 1400 Pa·s or more; η₁ Pa·s is a viscosity of the first sealant layer at 30°C, and t₁ mm is a layer thickness thereof; η₂ Pa·s is a viscosity of the second sealant layer at 30°C, and t₂ mm is a layer thickness thereof.
(3) The pneumatic tire as described in the above item (1) or (2), wherein the total thickness of the sealant layers formed by two or more kinds of the sealant compositions is less than 4 mm.

According to the present invention, a tire having sealant layers can be provided, wherein the sealant layers having different sensitivities to temperature and capable of being effectively functioned, though the individual thicknesses are small, in a temperature region to which the sealant layers can respond are arranged, whereby a layer thickness of the whole sealant layers results in being reduced; a load applied to the pneumatic tire is reduced by reducing a weight and deviation in a weight balance, and the sealant layers are effectively functioned as well in causing a puncture.

### BRIEF DESCRIPTION of THE DRAWINGS

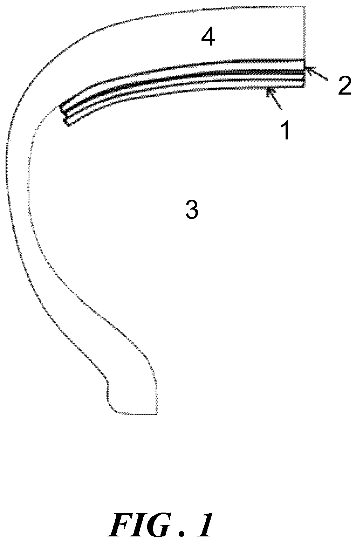

Fig. 1 is a schematic cross section showing the arrangement of the sealant layer of the pneumatic tire which is one example of the embodiments of the present invention.

### MODE FOR CARRYING OUT THE INVENTION

In the present invention, two or more kinds of the sealant materials prepared so that sensitivities to temperature are different are disposed in two or more multilayers, and the sealant layers shared in functions at every temperature to which the sealant layers can respond are arranged.

As shown above, pneumatic tires may be exposed to a temperature difference close to 100°C between the inside and the outside of the pneumatic tires in view of traffic situations in recent years estimated from the domestic situations in Japan. According to the conditions involving such the temperature difference as described above, the sealant materials which are operable separately in temperature ranges divided into a plurality of two or more ranges from high temperature, middle temperature to low temperature are arranged in a layer form.

In the pneumatic tires, a space in which a gas such as air and nitrogen is charged is a contact face with a rubber layer constituting the pneumatic tire, and the sealant materials are arranged so that the sealant materials are inserted into the contact face. Assuming that the contact face with the gas is set as a cavity side and that the face brought into direct contact with the rubber layer of the tire is set as a sealant layer, the sealant layer is disposed in a radial direction outside, that is, a direction side going away from the center of the tire, and it is disposed in a tire rubber side or a side merely called a tire side. In another expression, the tire rubber side can be referred to as an outermost side. The cavity side is referred to as a wheel side in which the tire is installed.

In the sealant layers arranged in the respective sides, the layer arranged in a cavity 3 side is referred to as a first sealant layer 1, and the layer arranged in a tire rubber 4 side is referred to as a second sealant layer 2. A sealant layer for a middle range may be further arranged between the first and second sealant layers. Also, a viscosity of the first sealant layer is referred to as η₁ Pa·s, and a viscosity of the second sealant layer is referred to as η₂ Pa·s. Both η₁ and η₂ show values at 30°C.

When two layers such as the first sealant layer and the second sealant layer which can clearly be distinguished are laminated, multilayers changed in stages or layers gradually changed in succession may be arranged in the first sealant layer through the second sealant layer. In the latter case, the layers cannot be provided with consecutive numbers, but the cavity side can be distinguished from the tire rubber side, and with respect to the viscosities of the respective layers, the layers which are distinguished can be arranged, wherein the layer having a viscosity of η₁ is arranged in the cavity side, and the layer having a viscosity of η₂ is arranged in the tire rubber side as defined above.

In the relation of a viscosity η₁ of the layer arranged in the cavity side with a viscosity η₂ of the layer arranged in the tire rubber side, a ratio η₁/η₂ is 1.6 or more. The ratio is preferably 1.7 or more and particularly preferably 2 or more.

Further, assuming that the thicknesses of the first sealant layer and the second sealant layer are t₁ mm and t₂ mm respectively, the viscosity η averaged in terms of the thickness can be defined. That is, η = (η₁·t₁ + η₂·t₂)/(t₁ + t₂), and the present invention is satisfied when the above viscosity is 1400 Pa·s or more. The above viscosity is preferably 1500 Pa·s or more. The viscosity is averaged in terms of the thickness considering that the viscosity is different from averaging in terms of a volume and a weight since the second sealant layer is increased in a volume though the second sealant layer has the same thickness due to that the second sealant layer is arranged in an outer periphery. However, since both the first sealant layer and the second sealant layer are present in positions sufficiently apart from the center of the tire, a difference caused by a peripheral length is not significant, and the viscosity can be averaged in terms of a volume and a weight which is roughly proportional to the volume in place of the thickness.

The ranges of the viscosity are shown above in detail respectively, and in any cases, the range is based on η₁>η₂. That is, in qualitative expression, the viscous rubber composition having a viscosity η₁ may be arranged in the cavity side exposed to the highest temperature, and the loose rubber composition having a viscosity η₂ may be arranged in the tire rubber side exposed to relatively low temperature. The loose rubber composition readily flows even at low temperature, and the viscous rubber composition is readily hardened even at high temperature.

The actions of the respective sealant rubber compositions observed when the tire is lacerated are considered. Causing a laceration means a state in which a communication passage penetrating the rubber layer reaches the cavity side, and therefore the sealant rubber composition in the cavity side is first pushed out and moved by an inner pressure. Further, the sealant rubber composition in the tire rubber side which is dragged by the flow of the sealant rubber composition in the cavity side is expected to move in succession.

As described above, if the viscous sealant rubber composition is in the cavity side, the viscous sealant rubber composition which is easy to flow moves quickly to a laceration which is a communication passage to seal the laceration. When the viscous sealant rubber composition is not provided with a sufficiently high fluidity, the loose sealant rubber composition which is easier to move moves to seal the laceration. As described above, the sealant rubber composition is arranged so that it functions in a fluidity corresponding to the shared temperature range.

On the contrary, if the loose sealant rubber composition is arranged in the cavity side, the loose sealant rubber composition functions well and seals the laceration when the loose sealant rubber composition is controlled so that the loose sealant rubber composition flows suitably, but when the loose sealant rubber composition is too easy to flow, the loose sealant rubber composition comes to blow out. On the other hand, the viscous sealant rubber composition arranged in the tire rubber side is dragged by the loose sealant rubber composition described above and moves. However, if the viscous sealant rubber composition does not reach a sufficiently high fluidity, the viscous sealant rubber composition cannot sufficiently follow the loose sealant rubber composition and acts insufficiently on stopping the leak of the loose sealant rubber composition. It is considered that the viscous sealant rubber composition is resultantly liable to be delayed in sealing the laceration in place of the loose sealant rubber composition.

The sealant rubber layers of the present invention have an object of resultantly reducing the use amounts thereof in total by disposing the sealant rubber compositions having different operable temperature ranges in a high temperature range and a low temperature range which are roughly divided.

The respective layer thicknesses can be controlled to 4 mm or less by dividing the operation area into a high temperature side and a low temperature side, and the layer thickness is controlled to preferably 3 mm or less, more preferably 2 mm or less. It is considered that the responsiveness is enhanced by controlling the total layer thickness when the respective sealant rubber compositions have to flow and that the advantageous effects are brought about by reducing the thicknesses.

The sealant material prepared by the sealant rubber composition obtained in the present invention is arranged in the inside of the pneumatic tire, and as defined above, the first sealant layer is arranged in the cavity part which is brought into contact with a gas such as air or nitrogen which is charged in the tire. Referring to FIG. 1, a second sealant layer 2 is first arranged on the surface of a tire rubber part 4 brought into contact with a tire cavity part 3 which is a space charged therein with a gas, and a middle layer if the middle layer is present and lastly a first sealant layer 1 are arranged thereon in piles. The respective layers described above are stuck by a method close to coating. To be natural, a reduction in the inner pressure due to the leakage of the gas is not caused as long as a laceration does not reach the cavity part, and therefore it is reasonable to arrange the sealant layers in the cavity part where the sealant material has to be functioned just when the laceration reaches there.

Though the sealant layer is stuck on the cavity part, equipments, jigs and tools may be brought into contact with the sealant material in the production step of the tire or when mounting in a wheel, and it is inconvenient in a certain case since the sealant material is a material still showing a fluidity. Accordingly, a contact face thereof with a gas may be covered so that the sealant material is prevented from being brought into direct contact with equipments, jigs and tools. Also, the sealant material may be retained by impregnating the sealant material in a material having pores to such an extent that a suitable fluidity is not prevented. In any cases, when a laceration reaches up to the air-charged part, the sealant material has to be smoothly transported to the lacerated part by the leaked gas in an autonomous manner.

Treatments such as covering and impregnating may be carried out in a certain case in order to make the sealant material easy to be held. Particularly preferably, problems such as an unnecessary increase in a weight are not brought about without taking protection methods such as covering and impregnating if the sealant material can be arranged by sticking the sealant material directly thereon.

### EXAMPLES

Next, the present invention shall be explained in further details with reference to examples and comparative examples, but the present invention shall not be restricted to examples.

The respective components were blended in mass part numbers shown in Table 1 to prepare rubber compositions A to F for sealants having different viscosities at 30°C, wherein a rubber component was set to 100 parts by mass. The rubber compositions B and C are different in the point that a process oil or polybutene is used for a plasticizer, and the other components were changed, but the viscosities were close. Accordingly, next time when a difference due to layer arrangements shown in Table 2 was investigated, the ifference due to layer arrangements was investigated by using only B. The viscosity was measured based on JIS Z8803 at a shear rate of 1 s⁻¹ and a temperature of 30°C by means of a cone plate type viscometer.

**Table 1**

| composition ID | A | B | C | D | E | F |
|---|---|---|---|---|---|---|
| EPDM *¹ | 60 | 60 | 60 | 60 | 60 | 60 |
| Bromobutyl Rubber *² | 40 | 40 | 40 | 40 | 40 | 40 |
| Carbon black *³ | 10 | 10 | 10 | 10 | 10 | 10 |
| Liquid polybutene *⁴ | 300 | 400 | | 500 | 400 | 400 |
| Process oil *⁵ | | | 250 | | | |
| Tackifier *⁶ | 20 | 20 | 20 | 20 | 20 | 20 |
| TBzTD *⁷ | 4.2 | 4.2 | 1.05 | 4.2 | 2.1 | 1.05 |
| Zinc oxide | 8.4 | 8.4 | 2.1 | 8.4 | 4.2 | 2.1 |
| Stearic acid | 2.4 | 2.4 | 0.6 | 2.4 | 1.2 | 0.6 |
| Sulfur | 0.6 | 0.6 | 0.15 | 0.6 | 0.3 | 0.15 |
| Viscosity [Pa·s] | 2745 | 1822 | 1813 | 1552 | 1512 | 882 |

| | | | | | | |
|---|---|---|---|---|---|---|
| *1: Ethylene-propylene-diene rubber: EP35, manufactured by JSR Corporation *2: Bromobutyl rubber: Bromobutyl 2255, manufactured by JSR Corporation *3: Carbon black: N330 *4: Liquid polybutene: Nisseki Polybutene HV300, manufactured by JXTG Nippon Oil & Energy Corporation *5: Process oil: Dina Process Oil NR26, manufactured by Idemitsu Kosan Co., Ltd. *6: Tackifier: Quintone A100, manufactured by Zeon Corporation *7: Vulcanization accelerator: tetrabenzyl thiuram disulfide: Sanceler TBZTD manufactured by Sanshin Chemical Industry Co., Ltd. | | | | | | |

As shown in Table 2, the rubber compositions of A to F excluding C were used for sealant rubbers and arranged in thicknesses shown in Table 2, and sealant rubbers were used to evaluate an air-sealing property at the respective temperatures, wherein airs of 60°C for high temperature, 25°C for room temperature and -30°C for low temperature were used, and sealant rubbers were evaluated on the following criteria:
a: sealing was successful
b: sealing was incomplete
c: sealing was failed

**Table 2**

| | Comparative Example | | | | | | |
|---|---|---|---|---|---|---|---|
| | 1 | 2 | 3 | 4 | 5 | 6 | 7 |
| First sealant layer | | | | | | | |
| Composition ID | A | B | B | D | E | F | A |
| Thickness (mm) | 1 | 1 | 2 | 1 | 1 | 1 | 1 |
| Second sealant layer | | | | | | | |
| Composition ID | A | B | B | D | E | F | B |
| Thickness (mm) | 1 | 1 | 2 | 1 | 1 | 1 | 1 |
| Ratio of viscosities η₁/η₂ | 1 | 1 | 1 | 1 | 1 | 1 | 1.51 |
| Average viscosity on thickness η [Pa·s] | 2745 | 1822 | 1822 | 1552 | 1512 | 882 | 2283 |
| High temperature sealing property | a | c | a | c | c | c | a |
| Room temperature sealing property | a | a | a | a | a | a | a |
| Low temperature sealing property | c | c | a | c | c | a | c |

| | Example | | | | | Comparative Example | |
|---|---|---|---|---|---|---|---|
| | 1 | 2 | 3 | 4 | 5 | 8 | 9 |
| First sealant layer | | | | | | | |
| Composition ID | A | A | A | B | B | F | D |
| Thickness (mm) | 1 | 1 | 1 | 1 | 2 | 1 | 1 |
| Second sealant layer | | | | | | | |
| Composition ID | D | E | F | F | F | A | A |
| Thickness (mm) | 1 | 1 | 1 | 1 | 1 | 1 | 1 |
| Ratio of viscosities η₁/η₂ | 1.77 | 1.82 | 3.11 | 2.07 | 2.07 | 0.32 | 0.57 |
| Average viscosity on thickness η [Pa·s] | 2148 | 2128 | 1813 | 1352 | 1508 | 1813 | 2148 |
| High temperature sealing property | a | a | a | b | a | c | c |
| Room temperature sealing property | a | a | a | a | a | a | a |
| Low temperature sealing property | a | a | a | a | a | a | a |

In the cases of Comparative Examples 1, 2 and 4 to 6 in which one kind of the rubber composition was superposed in a thickness of 1 mm for every rubber composition, that is, the single compositions were used in a thickness of 2 mm, the sealant layers could not be sealed in the whole temperature ranges of high temperature, room temperature and low temperature. The thickness of 4 mm is needed in order to carry out the sealing by the single composition as is the case with Comparative Example 3. The comparative examples described above were shown for comparison with the examples, and observing from the view point of the temperature ranges in which the sealant layers were successful in sealing, it can be found that the rubber compositions A for a high temperature range, B to E for a room temperature range and F for a low temperature range have an aptitude respectively. In Comparative Example 7 in which two kinds of the compositions were combined and in which a viscosity averaged in terms of a thickness satisfied the conditions but a viscosity ratio did not reach a prescribed value of 1.6, the sealant layers were failed in sealing in a low temperature range.

In all of Examples 1 to 3 in which used were two kinds of the sealant rubbers having the viscosities averaged in terms of a thickness and the viscosity ratios of the first and second sealant layers each satisfying the prescribed conditions, the sealant layers were successful in sealing in all temperature ranges. In Example 4, the sealant layer was incomplete in sealing in the high temperature range, but it fell in an allowable range. Further, in Example 5 in which the first sealant layer increased in a thickness to 2 mm was arranged, the sealant layer was successful in sealing in all temperature range. Also, in Comparative Example 7 in which a viscosity averaged in terms of a thickness satisfied the conditions and in which a viscosity ratio did not reach a prescribed value of 1.6, and Comparative Examples 8 and 9 in which a viscosity ratio did not reach even 1, that is, an arrangement order was inverted to a suitable one in the first place, the sealant layers did not come to be sealed. As apparent from Comparative Example 5 and Example 4 in which the viscosities averaged in terms of a thickness are equivalent, success or failure in the sealing is not determined simply by the viscosity. The layer thickness of the sealant layer in Example 5 which is larger than that in Comparative Example 5 is advantageous for sealing, but totally considering that in Comparative Examples 1, 2 and 4 in which A, B and D having higher viscosities were used, the sealant layers were failed in sealing in the whole temperature ranges, it can be found that success or failure in the sealing is not determined simply by the viscosity.

### INDUSTRIAL APPLICABILITY

A pneumatic tire provided with a self-sealing mechanism in which effective temporary repair is made in puncturing while minimizing an increase in a weight is obtained by making use of the present invention.

### EXPLANATION of CODES

1: First sealant layer
2: Second sealant layer
3: Tire cavity part
4: Tire rubber part

## Claims

1. A pneumatic tire having a sealant layer arranged in the tire, wherein sealant rubber compositions distinguished by sensitivities to temperature which are different in a cavity side and a tire rubber side are disposed in the sealant layer; and η₁/η₂ is 1.6 or more; η₁ is a viscosity of the sealant rubber composition in the cavity side, and η₂ is a viscosity of the sealant rubber composition in the tire rubber side at a shear rate of 1 s⁻¹ and a temperature of 30°C.

2. The pneumatic tire as described in claim 1, wherein two or more kinds of the sealant layers which are distinguished each independently as a first sealant layer in the cavity side and a second sealant layer in the tire rubber side are provided in the sealant layer; η₁/η₂ is 1.6 or more, and a viscosity η = (η₁·t₁ + η₂·t₂)/(t₁ + t₂) averaged in terms of the thickness is 1400 Pa·s or more; η₁ Pa·s is a viscosity of the first sealant layer at 30°C, and t₁ mm is a layer thickness thereof; η₂ Pa·s is a viscosity of the second sealant layer at 30°C, and t₂ mm is a layer thickness thereof.

3. The pneumatic tire as described in claim 1 or 2, wherein the total thickness of the sealant layers formed by two or more kinds of the sealant compositions is less than 4 mm.
